# EUROPEAN PATENT APPLICATION

(11) **EP 4 583 238 A1**
(43) Date of publication of application: **09.07.2025**
(21) Application number: 24194403.2
(22) Date of filing: 13.08.2024
(51) Int. Cl.: H01M 10/42, H01M 10/48

(54) **BATTERY PACK**

(30) Priority: 04.01.2024 KR 20240001745
(71) Applicant: SAMSUNG SDI CO., LTD., Giheung-gu Yongin-si, Gyeonggi-do 17084 (KR)
(72) Inventor: JEONG, Uihyeon, 17084 Yongin-si (KR); LEE, Youngmin, 17084 Yongin-si (KR)
(74) Representative: Marks & Clerk LLP

(57) **Abstract**

A battery pack may be provided. The battery pack may include a plurality of battery modules disposed along rows and columns; a plurality of slave battery management systems (BMSs) configured to disposed between two adjacent battery modules in each row of a plurality of rows among the plurality of battery modules, and configured to detect status information of the two battery modules; and a master BMS configured to receive status information of the plurality of battery modules through wireless optical communication with the plurality of slave BMSs, wherein two slave BMSs among the plurality of slave BMS may be configured to dispose at different heights.

## Description

### BACKGROUND

### (a) Field

This disclosure relates to a battery pack.

### (b) Description of the Related Art

A battery management system (BMS) may vary depending on a capacity or application of a battery pack, but usually may include a master BMS and a slave BMS.

The master BMS may collect measurement data of the battery module from the slave BMS and perform status estimation of the battery module, life prediction of the battery module, and fault diagnosis of the battery module based on the collected data. For this purpose, data communication technology between the master BMS and slave BMS is desired.

A wired communication between the master BMS and slave BMS may cause communication wiring defects and a risk of electrical short circuits due to external impact and vibration. In addition, communication wiring should be assembled by workers, which may increase lead time.

A radio frequency (RF) wireless communication between the master BMS and the slave BMS may be vulnerable to security, and the cost of RF integrated circuit is high due to the complex manufacturing process of the RF integrated circuit.

### SUMMARY

At least one of the embodiments may provide a battery pack that can improve at least one disadvantage of wired communication or wireless communication between a master BMS and a slave BMS.

In one aspect of the present invention there is provided a battery pack comprising:
battery modules arranged along rows and columns;
slave battery management systems (BMSs) respectively between adjacent ones of the battery modules in the rows of the battery modules, configured to detect status information of the adjacent ones of the battery modules, and at different respective heights; and
a master BMS configured to receive status information of the battery modules through wireless optical communication with the slave BMSs.

According to another aspect of the present invention, a battery pack may be provided. The battery pack may include, a plurality of battery modules disposed along rows and columns; a plurality of slave battery management systems (BMSs) configured between two adjacent battery modules in each row of a plurality of rows among the plurality of battery modules, and configured to detect status information of the two battery modules; and a master BMS configured to receive status information of the plurality of battery modules through wireless optical communication with the plurality of slave BMSs, wherein two slave BMSs among the plurality of slave BMSs are configured at different heights.

Each of the plurality of slave BMSs and the master BMS may include, an optical transmitter configured to transmit a wireless optical signal; and an optical receiver configured to receive a wireless optical signal.

The optical transmitters of each of the two slave BMSs may be configured at different heights from a reference plane, and the optical receivers of each of the two slave BMS may be configured at different heights from the reference plane.

The two slave BMSs may be configured at different heights from the uppermost surface or lowermost surface of the plurality of battery modules.

The battery pack may further include, a reflector configured to reflect a wireless optical signal received from the optical transmitter of each of the plurality of slave BMSs to the master BMS, and configured to reflect a wireless optical signal received from the optical transmitter of the master BMS to the plurality of slave BMSs.

Each of the plurality of slave BMSs may further include, a first analog front end integrated circuit (AFE IC) configured to measure status information of any one battery module of corresponding two battery modules; and a second AFE IC configured to measure status information of the other one battery module of the corresponding two battery modules.

Each of the plurality of slave BMSs may be fixed to any one side surface of two side surfaces facing each other in a corresponding row of two battery modules.

Each of the plurality of slave BMSs may be connected to the corresponding two battery modules through a flexible printed circuit board (FPCB).

The wireless optical communication may be configured to use an infrared transmission medium.

According to another aspect of the present invention there is provided a battery pack comprising:
battery modules arranged along rows and columns such that there are pairs of battery modules respectively in the rows;
slave battery management systems (BMSs) respectively on side surfaces of ones of the battery modules of the pairs of battery modules, the side surfaces facing others of the battery modules of the pairs of battery modules, ones of the slave BMSs in a same one of the columns being at different respective heights; and
a Master BMS configured to communicate with the slave BMSs.

According to another aspect of the present invention there is provided a battery pack that includes, a plurality of battery modules disposed along rows and columns; a plurality of slave battery management systems (BMSs) configured on any one side surface of two side surfaces that face each other of two adjacent battery modules in each row of a plurality of rows among the plurality of battery modules; and a Master BMS configured to communicate with the plurality of slave BMSs, wherein among the plurality of slave BMSs, slave BMSs disposed in the same column in different rows are configured at different heights.

Each of the plurality of slave BMSs and the master BMS may include: an optical transmitter configured to transmit a wireless optical signal; and an optical receiver configured to receive a wireless optical signal.

The each of the plurality of slave BMSs may further include: a first analog front end integrated circuit (AFE IC) configured to measure status information of any one battery module of corresponding two battery modules; and a second AFE IC configured to measure status information of the other one battery module of the corresponding two battery modules.

The plurality of slave BMSs and the master BMS may be configured to communicate using an infrared transmission medium.

The each of the plurality of slave BMSs may be configured to connect to the corresponding two battery modules through a flexible printed circuit board (FPCB).

The battery pack may further include a reflector configured to reflect a wireless optical signal received from the optical transmitter of each of the plurality of slave BMSs to the master BMS, and configured to reflect a wireless optical signal received from the optical transmitter of the master BMS to the plurality of slave BMSs.

At least some of the above and other features of the invention are set out in the claims.

### BRIEF DESCRIPTION OF THE DRAWINGS

FIG. 1 is a diagram showing an example of a battery pack according to an embodiment.
FIG. 2 is a diagram showing an example of the battery module shown in FIG. 1.
FIG. 3 is a schematic plan view of a battery pack to explain the position of a slave BMS according to an embodiment.
FIG. 4 is a diagram showing a slave BMS disposed between two battery modules.
FIG. 5 is a diagram showing the master BMS shown in FIG. 3.
FIG. 6 is a diagram illustrating an example of the spatial position of a slave BMS in a battery pack according to an embodiment.
FIG. 7 is a diagram showing another example of the spatial position of a slave BMS.
FIG. 8 is a diagram illustrating another example of the spatial position of a slave BMS in a battery pack according to an embodiment.
FIG. 9 is a schematic plan view of a battery pack to explain the position of a slave BMS according to another embodiment.

### DETAILED DESCRIPTION OF THE EMBODIMENTS

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey example implementations to those skilled in the art. The drawings and description are to be regarded as illustrative in nature and not restrictive. Like reference numerals designate like elements throughout the specification. In the flowchart described with reference to the drawings in this specification, the order of operations may be changed, several operations may be merged, some operations may be divided, and specific operations may not be performed.

Throughout the specification and claims, if a part is referred to "include" a certain element, it may mean that it may further include other elements rather than exclude other elements, unless specifically indicated otherwise.

In addition, expressions described in the singular may be interpreted in the singular or plural unless explicit expressions such as "one" or "single" are used.

Furthermore, terms including an ordinal number, such as first, second, etc., may be used to describe various elements, but the elements are not limited by the terms. The above terms are used only for the purpose of distinguishing one element from another element. For example, without departing from the scope of the present disclosure, a first element may be referred to as a second element, and similarly, a second element may be referred to as a first element.

In Addition, if a component is referred to be "connected" with another component, it includes not only the case where two components are "directly connected" but also the case where two components are "indirectly or non-contactedly connected" with another component interposed therebetween, or the case where two components are "electrically connected." On the other hand, if an element is referred to as "directly connected" to another element, it should be understood that no other element exists in the middle.

The described embodiments may have various modifications and may be embodied in different forms, and should not be construed as being limited to only the illustrated embodiments herein. The use of "can," "may," or "may not" in describing an embodiment corresponds to one or more embodiments of the present disclosure. The present disclosure covers all modifications, equivalents, and replacements within the idea and technical scope of the present disclosure. Further, each of the features of the various embodiments of the present disclosure may be combined with each other, in part or in whole, and technically various interlocking and driving are possible. Each embodiment may be implemented independently of each other or may be implemented together in an association.

In the drawings, the relative sizes of elements, layers, and regions may be exaggerated for clarity and/or descriptive purposes. Various embodiments are described herein with reference to sectional illustrations that are schematic illustrations of embodiments and/or intermediate structures. As such, variations from the shapes of the illustrations as a result of, for example, manufacturing techniques and/or tolerances, are to be expected. Further, specific structural or functional descriptions disclosed herein are merely illustrative for the purpose of describing embodiments according to the concept of the present disclosure. Thus, embodiments disclosed herein should not be construed as limited to the illustrated shapes of elements, layers, or regions, but are to include deviations in shapes that result from, for instance, manufacturing. Spatially relative terms, such as "beneath," "below," "lower," "lower side," "under," "above," "upper," "upper side," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below," "beneath," "or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly. Similarly, when a first part is described as being arranged "on" a second part, this indicates that the first part is arranged at an upper side or a lower side of the second part without the limitation to the upper side thereof on the basis of the gravity direction.

The terms "face" and "facing" may mean that a first object may directly or indirectly oppose a second object. In a case in which a third object intervenes between a first and second object, the first and second objects may be understood as being indirectly opposed to one another, although still facing each other.

It will be understood that when an element, layer, region, or component is referred to as being "formed on," "on," "connected to," or "(operatively or communicatively) coupled to" another element, layer, region, or component, it can be directly formed on, on, connected to, or coupled to the other element, layer, region, or component, or indirectly formed on, on, connected to, or coupled to the other element, layer, region, or component such that one or more intervening elements, layers, regions, or components may be present. In addition, this may collectively mean a direct or indirect coupling or connection and an integral or non-integral coupling or connection. For example, when a layer, region, or component is referred to as being "electrically connected" or "electrically coupled" to another layer, region, or component, it can be directly electrically connected or coupled to the other layer, region, and/or component or one or more intervening layers, regions, or components may be present. The one or more intervening components may include a switch, a resistor, a capacitor, and/or the like. In describing embodiments, an expression of connection indicates electrical connection unless explicitly described to be direct connection, and "directly connected/directly coupled," or "directly on," refers to one component directly connecting or coupling another component, or being on another component, without an intermediate component.

In addition, in the present specification, when a portion of a layer, a film, an area, a plate, or the like is formed on another portion, a forming direction is not limited to an upper direction but includes forming the portion on a side surface or in a lower direction. On the contrary, when a portion of a layer, a film, an area, a plate, or the like is formed "under" another portion, this includes not only a case where the portion is "directly beneath" another portion but also a case where there is further another portion between the portion and another portion. Meanwhile, other expressions describing relationships between components, such as "between," "immediately between" or "adjacent to" and "directly adjacent to," may be construed similarly. It will be understood that when an element or layer is referred to as being "between" two elements or layers, it can be the only element or layer between the two elements or layers, or one or more intervening elements or layers may also be present.

For the purposes of this disclosure, expressions such as "at least one of," or "any one of," or "one or more of' when preceding a list of elements, modify the entire list of elements and do not modify the individual elements of the list. For example, "at least one of X, Y, and Z," "at least one of X, Y, or Z," "at least one selected from the group consisting of X, Y, and Z," and "at least one selected from the group consisting of X, Y, or Z" may be construed as X only, Y only, Z only, any combination of two or more of X, Y, and Z, such as, for instance, XYZ, XYY, YZ, and ZZ, or any variation thereof. Similarly, the expressions "at least one of A and B" and "at least one of A or B" may include A, B, or A and B. As used herein, "or" generally means "and/or," and the term "and/or" includes any and all combinations of one or more of the associated listed items. For example, the expression "A and/or B" may include A, B, or A and B. Similarly, expressions such as "at least one of," "a plurality of," "one of," and other prepositional phrases, when preceding a list of elements, modify the entire list of elements and do not modify the individual elements of the list.

It will be understood that, although the terms "first," "second," "third," etc., may be used herein to describe various elements, components, regions, layers and/or sections, these elements, components, regions, layers and/or sections should not be limited by these terms. These terms do not correspond to a particular order, position, or superiority, and are used only used to distinguish one element, member, component, region, area, layer, section, or portion from another element, member, component, region, area, layer, section, or portion. Thus, a first element, component, region, layer or section described below could be termed a second element, component, region, layer or section, without departing from the scope of the present disclosure. The description of an element as a "first" element may not require or imply the presence of a second element or other elements. The terms "first," "second," etc. may also be used herein to differentiate different categories or sets of elements. For conciseness, the terms "first," "second," etc. may represent "first-category (or first-set)," "second-category (or second-set)," etc., respectively.

The terminology used herein is for the purpose of describing embodiments only and is not intended to be limiting of the present disclosure. As used herein, the singular forms "a" and "an" are intended to include the plural forms as well, while the plural forms are also intended to include the singular forms, unless the context clearly indicates otherwise. It will be further understood that the terms "comprises," "comprising," "have," "having," "includes," and "including," when used in this specification, specify the presence of the stated features, integers, steps, operations, elements, and/or components, but do not preclude the presence or addition of one or more other features, integers, steps, operations, elements, components, and/or groups thereof.

As used herein, the term "substantially," "about," "approximately," and similar terms are used as terms of approximation and not as terms of degree, and are intended to account for the inherent deviations in measured or calculated values that would be recognized by those of ordinary skill in the art. For example, "substantially" may include a range of +/- 5 % of a corresponding value. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value. Further, the use of "may" when describing embodiments of the present disclosure refers to "one or more embodiments of the present disclosure."

In some embodiments well-known structures and devices may be described in the accompanying drawings in relation to one or more functional blocks (e.g., block diagrams), units, and/or modules to avoid unnecessarily obscuring various embodiments. Those skilled in the art will understand that such block, unit, and/or module are/is physically implemented by a logic circuit, an individual component, a microprocessor, a hard wire circuit, a memory element, a line connection, and other electronic circuits. This may be formed using a semiconductor-based manufacturing technique or other manufacturing techniques. The block, unit, and/or module implemented by a microprocessor or other similar hardware may be programmed and controlled using software to perform various functions discussed herein, optionally may be driven by firmware and/or software. In addition, each block, unit, and/or module may be implemented by dedicated hardware, or a combination of dedicated hardware that performs some functions and a processor (for example, one or more programmed microprocessors and related circuits) that performs a function different from those of the dedicated hardware. In addition, in some embodiments, the block, unit, and/or module may be physically separated into two or more interact individual blocks, units, and/or modules without departing from the scope of the present disclosure. In addition, in some embodiments, the block, unit and/or module may be physically combined into more complex blocks, units, and/or modules without departing from the scope of the present disclosure.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

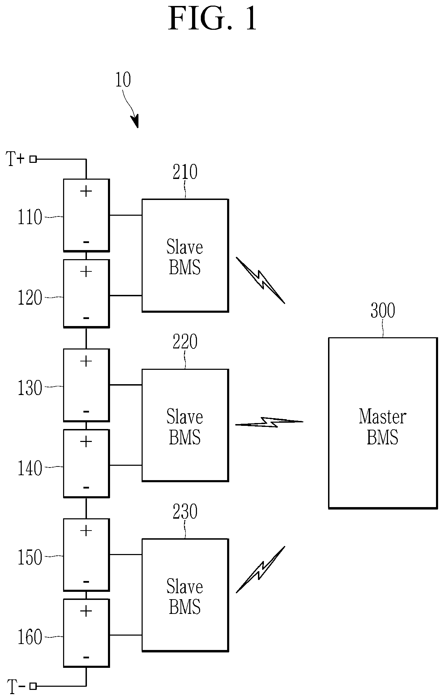

FIG. 1 is a diagram showing an example of a battery pack according to an embodiment.

Referring to FIG. 1, the battery pack 10 may include a plurality of battery modules 110, 120, 130, 140, 150, and 160, a plurality of slave battery management systems (BMS) 210, 220, and 230, and a master BMS 300. For convenience of explanation, FIG. 1 shows six battery modules 110, 120, 130, 140, 150, and 160.

The plurality of battery modules 110, 120, 130, 140, 150, and 160 may be connected to each other in series and/or parallel.

The plurality of battery modules 110, 120, 130, 140, 150, and 160 may be connected to a charging device or to a load through system terminals T+ and T-, and may be charged by the charging device or discharged by the load.

The plurality of battery modules 110, 120, 130, 140, 150, and 160 may each include a plurality of battery cells electrically connected in series and/or parallel.

Each of the plurality of slave BMSs 210, 220, and 230 may correspond to at least one battery module of battery modules 110, 120, 130, 140, 150, and 160.

Each of the plurality of slave BMSs 210, 220, and 230 may be electrically connected to the corresponding battery module among the battery modules 110, 120, 130, 140, 150, and 160.

According to one embodiment, each slave BMS 210, 220, and 230 may correspond to two battery modules. That is, one slave BMS may control two battery modules.

For example, the slave BMS 210 may be electrically connected to the battery modules 110 and 120, the slave BMS 220 may be electrically connected to the battery modules 130 and 140, and the slave BMS 230 may be electrically connected to the battery modules 150 and 160.

Each of the plurality of slave BMS 210, 220, and 230 may detect the overall status of the electrically connected battery modules, and may perform various control functions to adjust the state of the battery modules 110, 120, 130, 140, 150, and 160. The status may include cell voltages, module voltages, module currents and temperature, etc., and control functions may include charging, discharging, balancing, etc. The control function(s) may be performed directly by the slave BMS 210, 220, and 230 based on the status of the battery module 110, 120, 130, 140, 150, and 160 or may be performed according to commands from the master BMS 300. For example, the slave BMS 210 may be electrically connected to the two battery modules 110 and 120 and may perform control functions to adjust the states of the two battery modules 110 and 120.

The master BMS 300 may perform wireless optical communication with a plurality of slave BMSs 210, 220, and 230. The wireless optical communications may include infrared communications.

The master BMS 300 receives status information of the battery modules 110, 120, 130, 140, 150, and 160 from the plurality of slave BMSs 210, 220, and 230 through wireless optical communication, and may perform control functions such as state of charge (SOC), power control, cell balancing control, fault diagnosis control, cooling control, and/or thermal runaway detection based on the received status information. In addition, the master BMS 300 may control a relay for supplying or blocking power of the battery modules 110, 120, 130, 140, 150, and 160 to the load based on the status information of the battery modules 110, 120, 130, 140, 150, and 160.

Through wireless optical communication between the master BMS 300 and each of the plurality of slave BMSs 210, 220, and 230, wiring complexity compared to a wired communication method may be reduced and security may be strengthened compared to RF wireless communication.

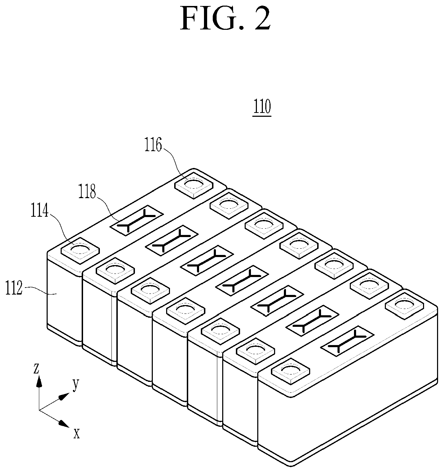

FIG. 2 is a diagram showing an example of the battery module shown in FIG. 1.

Referring to FIG. 2, the battery module 110 may include a plurality of battery cells 112 disposed or arranged in one direction.

These battery cells 112 may each accommodate an electrode assembly and an electrolyte inside a cell case forming a body thereof, and an opening 118 and electrode terminals 114 and 116 may be formed on the outer surface of the cell case.

The opening 118 may be configured to maintain a generally closed state, but may be configured to open if an event such as a thermal runaway of the battery cell 112 occurs and if gas or a flame is generated inside the battery cell 112, thereby emitting the gas or flame to the outside of the battery cell 112. For example, the opening 118 may be provided by forming a notch in a specific part of the battery cell 112 so that the specific part ruptures if the internal pressure of the battery cell 112 (sufficiently) increases.

The battery cell 112 may be composed of a square cell. Alternatively, the battery cell 112 may be composed of another type of cell (for example, a cylindrical cell), and the shape of the battery cell 112 may be not limited thereto.

The battery module 110 may be an assembly in which a plurality of battery cells 112 are combined into a single frame to increase the output power of the battery pack 10 and may protect against external impact or vibration.

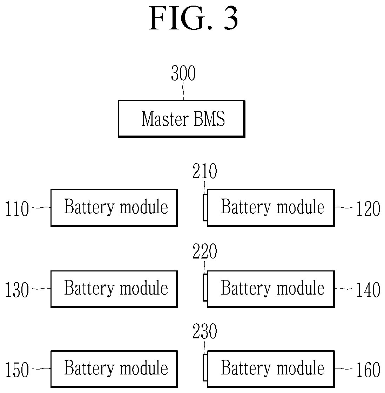

FIG. 3 is a schematic plan view of a battery pack to explain the position of a slave BMS according to an embodiment.

Referring to FIG. 3, a plurality of battery modules 110, 120, 130, 140, 150, and 160 may be disposed in a plurality of rows and a plurality of columns.

In one embodiment, two battery modules may be disposed in one row, and a slave BMS that manages the two battery modules may be disposed between the two battery modules disposed in one row.

Specifically, if the battery pack 10 includes six battery modules 110, 120, 130, 140, 150, and 160, the first and second battery modules 110 and 120 are disposed in the first row, and the first slave BMS 210 may be disposed between the first and second battery modules 110 and 120. The third and fourth battery modules 130 and 140 may be disposed in the second row, and the second slave BMS 220 may be disposed between the third and fourth battery modules 130 and 140. Additionally, the fifth and sixth battery modules 150 and 160 may be disposed in the third row, and the third slave BMS 230 may be disposed between the fifth and sixth battery modules 150 and 160.

In some embodiments, the first slave BMS 210 may be combined to a side surface of any one battery module (e.g., the second battery module 120) of the first and second battery modules 110 and 120. Similarly, the second slave BMS 220 may be combined to a side surface of any one battery module (e.g., the fourth battery module 140) of the third and fourth battery modules 130 and 140, and the third slave BMS 230 may be combined to a side surface of any one battery module (e.g., the sixth battery module 160) of the fifth and sixth battery modules 150 and 160

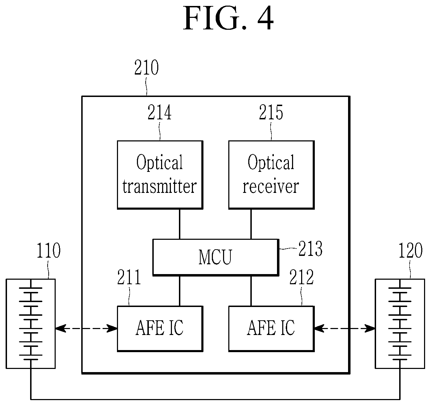

FIG. 4 is a diagram showing a slave BMS 210 disposed between two battery modules 110, 120.

Referring to FIG. 4, the slave BMS 210 may include analog front end (AFE) integrated circuits (ICs) 211 and 212, a microcontroller unit (MCU) 213, at least one optical transmitter 214, and at least one optical receiver 215. Although FIG. 4 shows the first slave BMS 210 disposed between the first and second battery modules 110 and 120 for convenience, the second or third slave BMSs 220 and 230 may also be configured in the same or in a similar manner to the first slave BMS 210.

Each of the AFE ICs 211 and 212 may be connected to each of the (here, first and second) battery modules 110 and 120 through a flexible printed circuit board (FPCB).

A first of the AFE ICs 211 may measure physical state information such as voltage, current, and/or temperature of the first battery module 110, and may control charging and discharging of the first battery module 110 and/or balancing of the first battery module 110. The first AFE IC 211 may transmit the measured status information of the first battery module 110 to the MCU 213.

A second of the AFE ICs 212 can measure physical state information such as voltage, current, and/or temperature of the second battery module 120, and control charging and discharging of the second battery module 120 and/or balancing of the second battery module 120. The second AFE IC 212 may transmit the measured status information of the second battery module 120 to the MCU 213.

The MCU 213 may control the operation of the two AFE ICs 211 and 212. The MCU 213 may transmit status information of the two battery modules 110 and 120, which may be transmitted from the two AFE ICs 211 and 212 to the optical transmitter 214.

In addition, the MCU 213 may receive control signals of the master BMS 300 through the optical receiver 215, and may control or command the two AFE ICs 211 and 212 according to the control signals of the master BMS 300. The MCU 213 may transmit the control signals of the master BMS 300 to the two AFE ICs 211 and 212.

The optical transmitter 214 may perform signal processing on the status information of the two battery modules 110 and 120 and may transmit the status information of the two battery modules 110 and 120 through a wireless optical signal.

The optical receiver 215 may receive the control signals of the master BMS 300 through a wireless optical signal, may perform signal processing on the received control signals of the master BMS 300, and may transmit signal processed control signals to the MCU 213.

According to an embodiment, the optical transmitter 214 and the optical receiver 215 may transmit and receive signals using an infrared transmission medium, respectively.

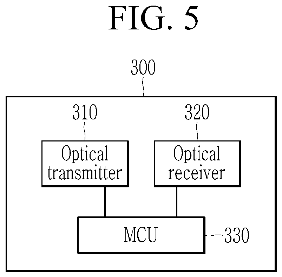

FIG. 5 is a diagram showing the master BMS shown in FIG. 3.

Referring to FIG. 5, the master BMS 300 may include an optical transmitter 310, an optical receiver 320, and an MCU 330.

The optical transmitter 310 may perform signal processing on the control signal of the master BMS 300 and may transmit the control signal of the master BMS 300 through a wireless optical signal.

The optical receiver 320 may receive status information of the battery modules 110, 120, 130, 140, 150, and 160 through wireless optical signals, and may transmit the received status information of the battery modules 110, 120, 130, 140, 150, and 160 to the MCU 330.

The MCU 330 may diagnose and control the battery modules 110, 120, 130, 140, 150, and 160 based on the status information of the battery modules 110, 120, 130, 140, 150, and 160. The MCU 330 may generate control signals for controlling the battery modules 110, 120, 130, 140, 150, and 160 and may transmit the control signals to the optical transmitter 310.

The optical transmitter 310 and the optical receiver 320 may transmit and receive signals using an infrared transmission medium, respectively.

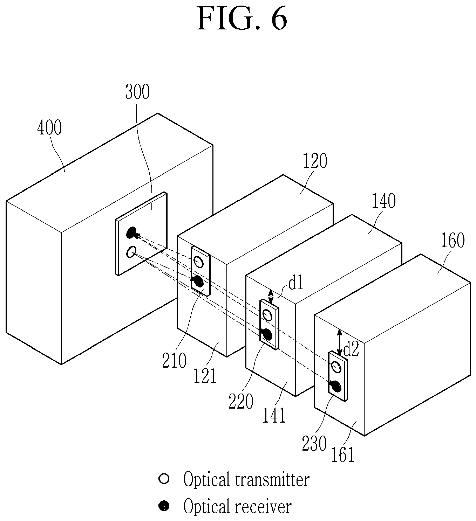

Such wireless optical communication cannot (or struggle to) transmit or receive signals if walls or obstacles exist. Therefore, the slave BMSs 210, 220, and 230 may be disposed as shown in FIG. 6 so that there are no walls or obstacles between the master BMS 300 and each slave BMS 210, 220, and 230 for transmitting and receiving signals.

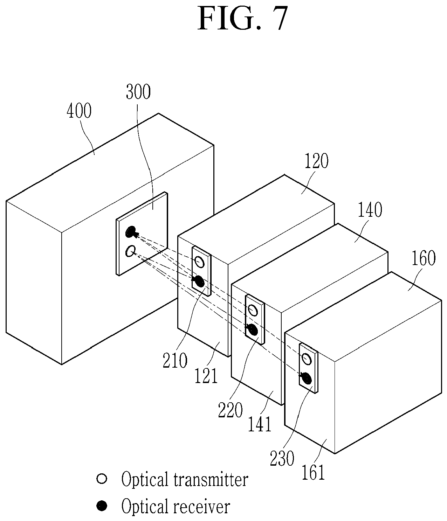

FIG. 6 is a diagram illustrating an example of the spatial position of a slave BMS in a battery pack according to an embodiment, and FIG. 7 is a diagram showing another example of the spatial position of a slave BMS.

Referring to FIGS. 3 and 6, the master BMS 300 may be combined to and fixed to one side surface of an electric part 400. The first slave BMS 210 may be disposed in the space between the first and second battery modules 110 and 120. More specifically, the first slave BMS 210 may be combined and fixed to one side surface of the two side surfaces of the first and second battery modules 110 and 120 that face each other.

The second slave BMS 220 may be disposed in the space between the third and fourth battery modules 130 and 140. More specifically, the second slave BMS 220 may be combined and fixed to one side surface of the two side surfaces of the third and fourth battery modules 130 and 140 that face each other.

The third slave BMS 230 may be disposed in the space between the fifth and sixth battery modules 150 and 160. More specifically, the third slave BMS 230 may be combined and fixed to one side surface of the two side surfaces of the fifth and sixth battery modules 150 and 160 that face each other.

In some embodiments, the first slave BMS 210 may be combined and fixed on the side surface 121 of the second battery module 120, i.e. a side surface among the two side surfaces of the two battery modules 110 and 120 that face each other, and the second slave BMS 220 may be combined and fixed on the side surface 141 of the fourth battery module 140, i.e. a side surface among the two side surfaces of the two battery modules 130 and 140 that face each other, and the third slave BMS 230 may be combined and fixed on the side surface 161 of the sixth battery module 160, i.e. a side surface among the two side surfaces of the two battery modules 150 and 160 that face each other.

According to the embodiment, the slave BMSs 210, 220, and 230 may be disposed at different heights with respect to the top surface or bottom surface of the (here, second, fourth and sixth) battery modules 120, 140, and 160. The height of the top surfaces or bottom surfaces of the (here, second, fourth and sixth) battery modules 120, 140, and 160 may be the same.

If the slave BMSs 210, 220, and 230 are disposed in parallel at the same height, the first slave BMS 210 or the second slave BMS 220 may act as an obstacle in wireless optical communication between the third slave BMS 230 and the master BMS 300. In addition, signals from the first slave BMS 210 or the second slave BMS 220 may act as interference. Furthermore, although there are no obstacles in wireless optical communication between the first slave BMS 210 and the master BMS 300, signals from the second slave BMS 220 or the third slave BMS 230 may act as interference.

In addition, as shown in FIG. 7, the battery modules 120, 140, and 160 to which the slave BMSs 210, 220, and 230 are each combined may be disposed to be spatially offset from each other (e.g. they may be spatially offset with respect to a vertical plane), so that there are no obstacles between each of the slave BMSs 210, 220, and 230 and the master BMS 300. In this way, interference caused by signals from each other may be reduced. However, this structure causes space waste, and thus the size of the battery pack 10 may increase.

Additionally, the slave BMSs 210, 220, and 230 are disposed in parallel at the same height, and the position of the master BMS 300 may be adjusted, but in this case, the spaces between the first and second battery modules 110 and 120, between the third and fourth battery modules 130 and 140, and between the fifth and sixth battery modules 150 and 160 should be relatively wide, and this structure may also result in space waste.

To solve these disadvantages, as shown in FIG. 6, the slave BMSs 210, 220, and 230 may be disposed at different heights.

In one embodiment, the first slave BMS 210 may be combined to the side surface 121 of the second battery module 120 at the same height as the top surfaces of the second, fourth and sixth battery modules 120, 140, and 160, and the second slave BMS 220 may be combined to the side surface 141 of the fourth battery module 140 at a height spaced apart from the top surfaces of the second, fourth and sixth battery modules 120, 140, and 160 by a distance d1. Additionally, the third slave BMS 230 may be combined to the side surface 161 of the sixth battery module 160 at a height spaced apart from the top surfaces of the second, fourth and sixth battery modules 120, 140, and 160 by a distance d2. The distance d1 and distance d2 may be different. The distance d2 may be larger than the distance d1. In this way, the positions of the optical transmitters of each of the slave BMSs 210, 220, and 230 may have different respective heights from a reference plane, and the positions of the optical receivers of each of the slave BMSs 210, 220, and 230 may likewise have different respective heights from the reference plane.

Because the slave BMSs 210, 220, and 230 have different heights, the slave BMSs may not act as an obstacle in wireless optical communication between each of the slave BMSs 210, 220, and 230 and the master BMS 300, and interference caused by signals from other slave BMSs may be reduced, and space waste may also be reduced.

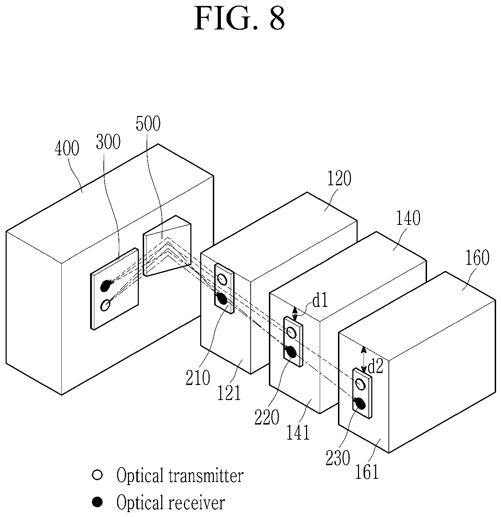

FIG. 8 is a diagram illustrating another example of the spatial positions of slave BMSs in a battery pack according to an embodiment.

Referring to FIGS. 3 and 8, a reflector 500 may be disposed at the position of the master BMS 300 shown in FIG. 6. For example, a reflective film or mirror may be used as the reflector 500.

The reflector 500 may reflect signals between each of the slave BMSs 210, 220, and 230 and the master BMS 300. The reflector 500 may reflect the signals received from the slave BMSs 210, 220, and 230 to the master BMS 300, and may reflect the signals received from the master BMS 300 to the slave BMSs 210, 220, and 230. Specifically, the reflector 500 may reflect a wireless optical signal received from the optical transmitter of each of the slave BMSs 210, 220, and 230 to the master BMS 300, and may reflect a wireless optical signal received from the optical transmitter of the master BMS 300 to the slave BMSs 210, 220, and 230. The reflector 500 may be disposed at a reflection angle capable of transmitting and receiving signals between each of the slave BMS 210, 220, and 230 and the master BMS 300.

Since the slave BMSs 210, 220, and 230 may be respectively disposed between the first two battery modules 110 and 120, between the second two battery modules 130 and 140, and between the third two battery modules 150 and 160, respectively, even if the slave BMSs 210, 220, and 230 have different heights, there may be restrictions in the position of the master BMS 300.

However, as shown in FIG. 8, if the reflector 500 may be disposed and the angle of the reflector 500 may be adjusted, freedom of positional disposition of the master BMS 300 may be improved without wasting space between the first two battery modules 110 and 120, between the second two battery modules 130 and 140, and between the third two battery modules 150 and 160.

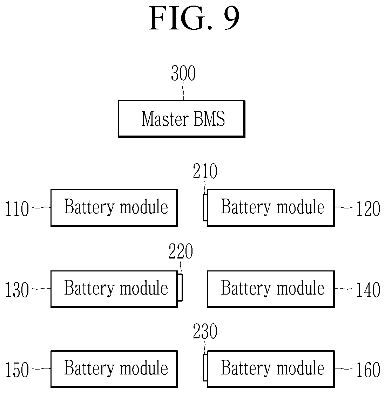

FIG. 9 is a diagram of the battery pack 10 for explaining the placement position of the slave BMSs according to another embodiment. This is a rough floor plan.

Referring to FIG. 9, in each row, the slave BMSs 210, 220, and 230 are not combined to the battery modules 120, 140, and 160 that are disposed in the same column. Instead the slave BMSs 210, 220, and 230 are combined and fixed to the side surfaces of respective battery modules in different (here, alternating) columns for each row.

For example, the first slave BMS 210 may be fixed to the side surface of the second battery module 120, and the second slave BMS 220 may be fixed to the side surface of the third battery module 130. The third slave BMS 230 may be fixed to the side surface of the sixth battery module 160. At this time, slave BMSs disposed in the same column in different respective rows, for example, the first slave BMS 210 and the third slave BMS 230, may be disposed at different heights from the reference plane as shown in FIG. 6.

By doing this, the slave BMSs 210, 220, and 230 may have different respective positions and/or different heights, and thus other slave BMSs may not act as an obstacle in wireless optical communication between each of the slave BMSs 210, 220, and 230 and the master BMS 300, such that interference caused by signals from other slave BMS may be reduced, and space waste may also be reduced.

According to at least one of the embodiments, by using wireless optical communication between the master BMS and the slave BMS, wiring complexity compared to the wired communication methods may be reduced and security may be strengthened compared to RF wireless communication.

According to at least one of the embodiments, signal interference between the master BMS and the slave BMSs may be reduced through the disposition of the slave BMSs, and communication efficiency may be increased by reducing obstacles that interfere with communication.

Although the embodiments of the present disclosure have been described in detail above, the scope of the present disclosure is not limited thereto, and various modifications and improvements of those skilled in the art using the basic concepts of the present disclosure defined in the following claims, with functional equivalents thereof to be included therein, are also included in the present disclosure.

### <Description of some of the reference symbols>

100: Battery pack
110, 120, 130, 140, 150, 160: Battery module
210, 220, 230: Slave BMS
300: Master BMS
211,212: AFE IC
213, 330: MCU
214, 310: Optical transmitter
215, 320: Optical receiver

## Claims

1. A battery pack comprising:
a plurality of battery modules disposed along rows and columns;
a plurality of slave battery management systems (BMSs) configured between two adjacent battery modules in each row of a plurality of rows among the plurality of battery modules, and configured to detect status information of the two battery modules; and
a master BMS configured to receive status information of the plurality of battery modules through wireless optical communication with the plurality of slave BMSs,
wherein two slave BMSs among the plurality of slave BMSs are configured at different heights.

2. The battery pack as claimed in claim 1, wherein
each of the plurality of slave BMSs and the master BMS comprises:
an optical transmitter configured to transmit a wireless optical signal; and
an optical receiver configured to receive a wireless optical signal.

3. The battery pack as claimed in claim 2, wherein
the optical transmitters of each of the two slave BMSs are configured at different heights from a reference plane, and the optical receivers of each of the two slave BMS are configured at different heights from the reference plane.

4. The battery pack as claimed in claim 2 or claim 3, wherein
the two slave BMSs are configured at different heights from the uppermost surface or lowermost surface of the plurality of battery modules.

5. The battery pack as claimed in any one of claims 2 to 4, further comprising
a reflector configured to reflect a wireless optical signal received from the optical transmitter of each of the plurality of slave BMSs to the master BMS, and configured to reflect a wireless optical signal received from the optical transmitter of the master BMS to the plurality of slave BMSs.

6. The battery pack as claimed in any one of claims 2 to 5, wherein
each of the plurality of slave BMSs further comprises:
a first analog front end integrated circuit (AFE IC) configured to measure status information of any one battery module of corresponding two battery modules; and
a second AFE IC configured to measure status information of the other one battery module of the corresponding two battery modules.

7. The battery pack as claimed in any one of claims 2 to 6, wherein
each of the plurality of slave BMSs is fixed to any one side surface of two side surfaces facing each other in a corresponding row of two battery modules.

8. The battery pack as claimed in any one of the preceding claims, wherein
each of the plurality of slave BMSs is connected to the corresponding two battery modules through a flexible printed circuit board (FPCB).

9. The battery pack as claimed in any one of the preceding claims, wherein
the wireless optical communication may be configured to use an infrared transmission medium.

10. A battery pack comprising:
a plurality of battery modules disposed along rows and columns;
a plurality of slave battery management systems (BMSs) configured on any one side surface of two side surfaces that face each other of two adjacent battery modules in each row of a plurality of rows among the plurality of battery modules; and
a Master BMS configured to communicate with the plurality of slave BMSs,
wherein among the plurality of slave BMSs, slave BMSs disposed in the same column in different rows are configured at different heights.

11. The battery pack as claimed in claim 10, wherein
each of the plurality of slave BMSs and the master BMS comprises:
an optical transmitter configured to transmit a wireless optical signal; and
an optical receiver configured to receive a wireless optical signal.

12. The battery pack as claimed in claim 11, wherein
the each of the plurality of slave BMSs further comprises:
a first analog front end integrated circuit (AFE IC) configured to measure status information of any one battery module of corresponding two battery modules; and
a second AFE IC configured to measure status information of the other one battery module of the corresponding two battery modules.

13. The battery pack as claimed in any one of claims 10 to 12, wherein:
the plurality of slave BMSs and the master BMS are configured to communicate using an infrared transmission medium.

14. The battery pack as claimed in any one of claims 10 to 13, wherein the each of the plurality of slave BMSs is configured to connect to the corresponding two battery modules through a flexible printed circuit board (FPCB).

15. The battery pack as claimed in any one of claims 10 to 14, further comprising
a reflector configured to reflect a wireless optical signal received from the optical transmitter of each of the plurality of slave BMSs to the master BMS, and configured to reflect a wireless optical signal received from the optical transmitter of the master BMS to the plurality of slave BMSs.
